# FASCICULE DE BREVET EUROPEEN

(11) **EP 2 692 598 B1**
(45) Date de publication et mention de la délivrance du brevet: **14.09.2016**
(21) Numéro de dépôt: 13178702.0
(22) Date de dépôt: 31.07.2013
(51) Int. Cl.: B60S 1/38, B60S 1/52

(54) **Dispositif de connexion entre un bras d'essuyage et un balai d'essuyage**
Verbindungsvorrichtung zwischen einem Wischerarm und einem Scheibenwischerelement
Connection device between a wiper arm and a wiper blade

(30) Priorité: 02.08.2012 FR 1257519
(43) Date de publication de la demande: 05.02.2014
(73) Titulaire: Valeo Systèmes d'Essuyage, 78321 La Verrière (FR)
(72) Inventeur: Thebault, Denis, 63000 Clermont Ferrand (FR); Bousset, Xavier, 63115 Mezel (FR)
(74) Mandataire: Léveillé, Christophe

(56) Documents cités:
- DE-A1-102009 043 694
- DE-A1-102009 043 695
- DE-A1-102010 056 461
- US-A- 4 339 839
- US-A1- 2011 107 541

## Description

Le domaine de la présente invention est celui des équipements pour les véhicules, et plus particulièrement celui des équipements pour l'essuyage des vitres d'un véhicule. La présente invention vise un dispositif de connexion assurant une liaison mécanique entre un bras d'essuyage et un balai d'essuyage apte à essuyer un pare-brise ou une vitre arrière du véhicule.

Les véhicules automobiles sont couramment équipés de système d'essuie-glace pour assurer un balayage et un lavage du pare-brise et éviter que la vision qu'a le conducteur de son environnement ne soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans cette seconde solution, le balai est rattaché au bras tournant de l'essuie-glace par un ensemble constitué d'un connecteur mécanique et d'un adaptateur. Le connecteur mécanique est une pièce qui est sertie directement sur le balai plat, alors que l'adaptateur est une pièce intermédiaire qui permet la fixation du connecteur sur le bras de l'essuie-glace.

Le connecteur mécanique évoqué ci-dessus est fabriqué par un procédé de moulage, comprenant au moins un tiroir dont l'extraction permet de générer des évidements dans lesquels un liquide de lavage du pare-brise peut circuler. Ce procédé de moulage impose un retrait du tiroir au niveau d'une face libre du connecteur. Par ailleurs, ce retrait génère un manchon qui déborde d'une face externe du connecteur.

Un tel procédé de fabrication présente plusieurs inconvénients.

En premier lieu, le manchon est généré sur une face externe du connecteur au niveau de laquelle il peut être nécessaire de créer un orifice de pulvérisation du liquide de lavage sur le pare-brise. La présence du manchon gène alors la fabrication de l'orifice de pulvérisation, en particulier lorsque la position du manchon est en interférence avec la position de l'orifice de pulvérisation.

En second lieu, la présence du manchon débordant du connecteur mécanique dégrade l'aspect esthétique général de ce connecteur, en particulier en raison du fait qu'il faut obturer ce manchon par des moyens rapportés sur le connecteur.

DE-A-102009043694 montre le préambule de la revendication 1. Le but de la présente invention est donc de résoudre les inconvénients décrits ci-dessus en concevant un dispositif de connexion qui permet d'extraire le tiroir nécessaire à la création d'un canal qui alimente le conduit en passant par une cavité du connecteur mécanique déjà existante, en particulier la cavité utilisée pour réaliser la liaison pivot entre le balai d'essuyage et le bras d'essuyage.

L'invention a donc pour objet un dispositif de connexion apte à relier un balai d'essuyage d'une vitre d'un véhicule à un bras d'essuyage, comprenant au moins un moyen de solidarisation sur le balai d'essuyage et un moyen de liaison avec le bras d'essuyage, ledit dispositif de connexion comprenant au moins un canal dans lequel un liquide est apte à circuler, caractérisé par le fait que le canal débouche au niveau du moyen de liaison. Ce canal débouchant dans le moyen de liaison permet d'extraire un tiroir générateur du canal via le moyen de liaison, pendant une opération de démoulage du dispositif de connexion. Un tel dispositif de connexion est ainsi reconnaissable en ce qui ne comporte pas de forme particulière sur la surface externe du dispositif de connexion dans le prolongement du canal, cette forme étant notamment liée à l'extraction du tiroir.

Le dispositif de connexion comprend un conduit qui s'étend selon une direction longitudinale d'extension du dispositif de connexion et en communication avec le canal, ce dernier étant agencé transversalement au conduit.

Selon un exemple particulier, le canal s'étend selon un axe perpendiculaire à une direction longitudinale dans laquelle s'étend le conduit.

Il est possible de prévoir une canalisation en communication avec le canal, ladite canalisation s'étendant selon un axe concourant à un axe d'extension du canal. Cette canalisation alimente en liquide le canal, et forme ainsi une canalisation d'alimentation de ce canal.

Selon un mode de réalisation, la canalisation peut déboucher dans le canal au niveau du moyen de liaison.

Le dispositif de connexion selon l'invention comprend un moyen d'obturation du canal au niveau du moyen de liaison. Un tel moyen d'obturation assure une étanchéité au liquide pour empêcher celui-ci de sortir par le moyen de liaison.

Selon un exemple de réalisation, le dispositif peut comprendre une embase dans laquelle est ménagé le conduit, ladite embase étant surmontée par un flanc dans lequel sont ménagés au moins en partie le canal et le moyen de liaison. Avantageusement, le moyen de solidarisation au balai d'essuyage est ménagé dans l'embase.

Selon une alternative, le moyen de liaison peut comprendre le moyen d'obturation logé dans une cavité ménagée dans le flanc. Le moyen d'obturation forme ainsi un élément qui réalise la liaison pivot entre le balai d'essuyage et son bras.

Selon l'invention, le moyen d'obturation est formé par une bague comprenant un trou constitutif de la liaison pivot apte à être opérée entre le dispositif de connexion et le bras d'essuyage.

Selon un aspect de l'invention, la cavité délimite un épaulement dans lequel se loge un bord annulaire ménagé sur la bague.

On notera que la cavité peut présenter une section circulaire et s'étendre selon une direction transversale à la direction longitudinale d'extension du conduit.

Selon un exemple de l'invention, le canal est incliné autour de la direction longitudinale d'extension du conduit selon un angle compris entre 0°, correspondant à une direction verticale, et 60°. Avantageusement, l'angle peut être compris entre 45° et 55° par rapport à la direction verticale.

Quel que soit le mode de réalisation du dispositif de connexion, il peut comprendre au moins un orifice de projection du liquide sur la vitre, en communication avec le conduit.

L'invention concerne également un système d'essuyage d'une vitre d'un véhicule, comprenant un balai d'essuyage relié mécaniquement à un bras d'essuyage au moins par un dispositif de connexion tel que détaillé ci-dessus.

Dans une telle situation, le balai d'essuyage comprend au moins une rampe de projection d'un liquide de lavage de la vitre alimentée en liquide de lavage par le dispositif de connexion. Une telle rampe peut être scindée en deux portions, chacune s'étendant longitudinalement le long du balai d'essuyage de part et d'autre du dispositif de connexion. Ces portions peuvent être formées par deux déflecteurs d'air rapportés sur le balai d'essuyage.

Un tout premier avantage selon l'invention réside dans l'absence de manchon débordant du dispositif de connexion.

Une telle absence permet de positionner un ou des orifices de projection sur le dispositif de connexion sans que ce positionnement ne soit gêné par la présence d'un manchon débordant. Un tel effet est particulièrement intéressant pour respecter un principe de répartition des orifices de projection tout le long de la direction d'extension du balai d'essuyage, y compris au niveau du dispositif de connexion. Un exemple de ce principe est notamment exposé dans le document WO2011/160952A1.

En outre, l'aspect esthétique du dispositif de connexion est significativement amélioré, puisque la forme disgracieuse du manchon peut être supprimée.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, d'un système d'essuyage pour un vitrage d'un véhicule automobile selon l'invention,
- la figure 2 est une vue en perspective et en éclaté du dispositif de connexion selon l'invention,
- la figure 3 est une vue similaire à la figure 2 illustrant l'extraction des tiroirs lors du moulage du dispositif de connexion,
- la figure 4 est une vue en coupe d'un exemple de réalisation du dispositif de connexion selon l'invention,
- la figure 5 est une autre vue en coupe du dispositif de connexion selon l'invention.

Il faut noter que les figures exposent l'invention de manière détaillée pour mettre en oeuvre l'invention, lesdites figures pouvant bien entendu servir à mieux définir l'invention le cas échéant.

Dans la suite de la description, les dénominations longitudinales ou latérales se réfèrent à l'orientation du balai d'essuyage selon l'invention. La direction longitudinale correspond à l'axe principal du balai d'essuyage dans lequel il s'étend, alors que les orientations latérales correspondent à des droites concourantes, c'est-à-dire qui croisent la direction longitudinale, notamment perpendiculaires à l'axe longitudinal du balai d'essuyage dans son plan de rotation. Pour les directions longitudinales, les dénominations extérieure ou intérieure s'apprécient par rapport au point de fixation du balai sur le bras, la dénomination intérieure correspondant à la partie où le bras et un demi-balai s'étendent. Enfin, les directions référencées comme supérieures ou inférieures correspondent à des orientations perpendiculaires au plan de rotation du balai d'essuyage, la dénomination inférieure contenant le plan du pare-brise.

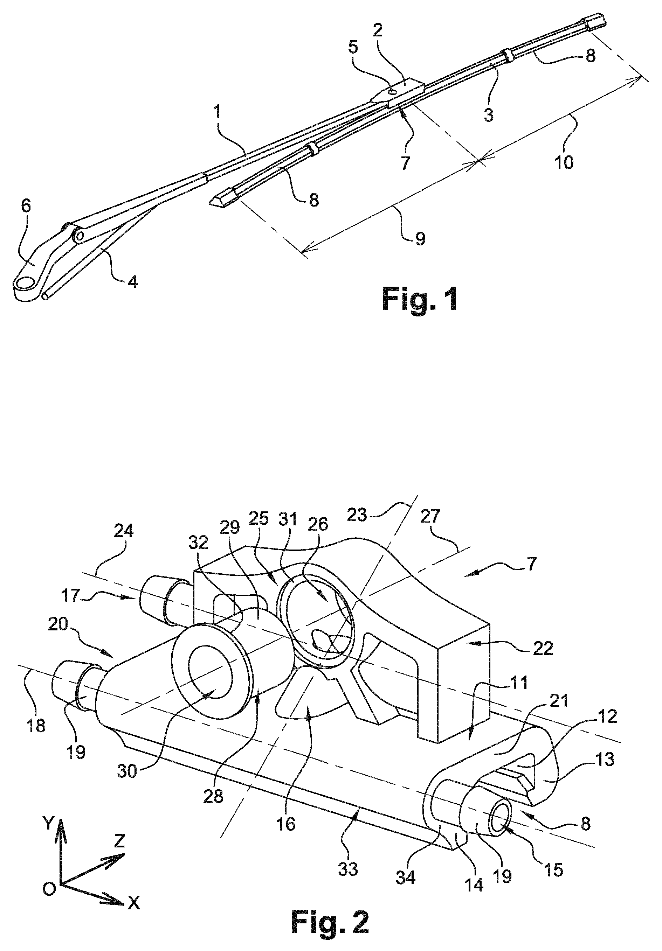

En se référant tout d'abord à la figure 1, on voit un système d'essuyage composé d'un porte-balai ou bras d'essuyage 1 se prolongeant à son extrémité extérieure par une pièce terminale 2, qui est fixée, du côté intérieur, par exemple par un sertissage sur le bras 1. La pièce terminale 2 coopère avec un adaptateur porteur d'un balai d'essuyage 3 par l'intermédiaire d'un dispositif de connexion 7 selon l'invention. L'adaptateur a vocation à, par exemple, s'insérer dans la pièce terminale 2 par un mouvement de translation selon une direction longitudinale, pour venir dans une position d'utilisation, où il est positionné en butée contre une forme coopérante donnée à la pièce terminale 2. Il y est alors fixé de façon réversible au moyen, par exemple, d'un bouton escamotable de verrouillage 5, qui est fixé en extrémité d'une languette flexible issue de l'adaptateur et qui coopère avec un évidement pratiqué à cet effet dans la partie supérieure de la pièce terminale 2.

L'adaptateur et le dispositif de connexion 7 sont reliés mécaniquement l'un à l'autre par l'intermédiaire d'un moyen de liaison. Selon un exemple de réalisation, ce moyen de liaison est une liaison pivot ménagée entre l'adaptateur et le dispositif de connexion 7 selon l'invention. Le balai d'essuyage 3 est ainsi maintenu en translation vis-à-vis du bras d'essuyage 1, alors qu'une rotation autour de la liaison pivot est autorisée par le moyen de liaison.

Un tube 4 d'amenée de liquide court le long du bras d'essuyage 1. Ce tube 4 canalise un liquide de lavage du pare-brise pour l'amener au niveau du dispositif de connexion 7 entre le bras d'essuyage 1 et le balai d'essuyage 3.

Le balai d'essuyage 3 comprend au moins une rampe de projection 8 du liquide de lavage de la vitre. Cette rampe de projection 8 est alimentée en liquide de lavage par le dispositif de connexion 7. Une telle rampe de projection 8 peut être répartie de part et d'autre du dispositif de connexion 7 en une première portion référencée 9 et une deuxième portion référencée 10. La première portion 9 s'étend longitudinalement le long du balai d'essuyage 3, du côté intérieur de celui-ci, alors que la deuxième portion 10 s'étend longitudinalement le long du balai d'essuyage 3, du côté extérieur de ce dernier. La première portion 9 et la deuxième portion 10 sont toutes deux raccordées hydrauliquement au dispositif de connexion 7.

La rampe de projection 8 peut par exemple être formée par un tube pourvu d'orifices d'aspersion, puis rapportée sur le balai d'essuyage 3. Elle peut également être mise en oeuvre par un déflecteur d'air qui coiffe le balai d'essuyage 3 et dans lequel est ménagé, d'une part un conduit de circulation du liquide de lavage qui s'étend le long de la direction longitudinale du balai d'essuyage 3, et d'autre part une multiplicité d'orifices d'aspersion du liquide de lavage.

Le balai d'essuyage 3 peut comprendre un support à l'intérieur duquel est logée une vertèbre de rigidification. Alternativement, le support peut être pourvu de deux fentes ouvertes et disposées latéralement, ces deux fentes recevant chacune une vertèbre de rigidification. Le support comprend encore une cavité longitudinale dans laquelle est enfilée une raclette, autrement appelée lame de balayage. Cette dernière est un composant souple du balai d'essuyage 3 en appui contre la face extérieure du pare-brise.

Sur sa partie supérieure, le support peut être recouvert par le déflecteur d'air agencé pour utiliser l'effet dynamique du déplacement du véhicule pour augmenter la force d'appui du balai d'essuyage 3 sur le pare-brise. Comme évoqué plus haut, ce déflecteur d'air peut également former la rampe de projection dont le balai d'essuyage 3 est pourvu.

A l'extrémité opposée à la pièce terminale 2 par rapport au bras d'essuyage 1, on trouve un entraîneur 6 pourvu d'un trou au travers duquel un arbre d'un moteur d'entraînement ou d'une tringlerie passe en vue de mettre en rotation le système d'essuyage.

En se référant maintenant à la figure 2, on voit plus précisément le dispositif de connexion 7 selon l'invention. Cette pièce est définie dans un repère orthonormé OX-OY-OZ, où la direction OX représente une direction longitudinale, la direction OY représente une direction verticale et la direction OZ représente une direction transversale.

Ce dispositif de connexion 7 est agencé pour être rendu solidaire, par exemple par sertissage, du balai d'essuyage qui se déplace sur le pare-brise de véhicule. Un tel balai d'essuyage est entraîné en rotation par le bras d'essuyage.

Le dispositif de connexion 7 assure une liaison mécanique dite complète avec le balai d'essuyage, en ce sens qu'il n'existe pas de degré de liberté. Cette liaison mécanique complète est assurée par un moyen de solidarisation 8 agencé sur le dispositif de connexion 7.

Le dispositif de connexion 7 comprend une embase 11 qui s'étend longitudinalement et transversalement. Cette embase 11 reçoit le moyen de solidarisation 8 sur le balai d'essuyage, et plus particulièrement sur une vertèbre de rigidification de ce balai d'essuyage. Ce moyen de solidarisation 8 prend par exemple la forme d'au moins une saignée 12 ménagée dans l'embase 11.

Selon un exemple de réalisation, l'embase 11 peut comprendre deux saignées 12 opposées l'une à l'autre et chacune ménagée dans des bras 13 et 14 délimitant l'embase 11. Ces deux saignées 12 forment ainsi des crochets aptes à venir en prise sur le balai d'essuyage.

Le dispositif de connexion 7 assure une fonction de transport et de distribution d'un liquide de lavage du pare-brise. Pour ce faire, le dispositif de connexion 7 comprend un circuit hydraulique constitué d'un conduit 15, d'un canal 16 et éventuellement d'une canalisation 17 dans lesquels circule le liquide de lavage en vue d'être distribué dans le balai d'essuyage, de chaque côté du dispositif de connexion 7.

Le conduit 15 est formé par un évidement rectiligne, notamment de section circulaire, qui s'étend selon une direction longitudinale 18, cette dernière étant parallèle à la direction longitudinale OX. Un tel conduit 15 est ménagé sur un côté de l'embase 11, cette dernière donnant naissance à deux embouts 19 qui délimitent le conduit 15. Chacun de ces embouts 19 débouche de deux extrémités longitudinales référencées 20 et 21 de l'embase 11, délimitant le dispositif de connexion 7 selon son extension longitudinale.

Le moyen de distribution du liquide de lavage constitutif du balai d'essuyage, par exemple le déflecteur d'air évoqué plus haut, est ainsi enfilé sur chaque embout 26.

L'embase 11 est surmontée d'un flanc 22, par exemple, issu de matière avec cette embase 11. Ce flanc 22 présente une dimension transversale et une dimension longitudinale inférieures à celles de l'embase 11. Le flanc 22 est par exemple centré sur l'embase 11, selon l'axe transversal OZ et l'axe longitudinal OX.

Le flanc 22 comprend le canal 16 agencé dans le dispositif de connexion pour alimenter en liquide le conduit 15. Le canal 16 et le conduit 15 sont ainsi en communication hydraulique l'un avec l'autre. Le canal 16 est formé par un évidement ménagé dans le dispositif de connexion 7 et qui s'étend de manière rectiligne selon un axe 23 transversal avec le conduit 15, avantageusement concourant avec la direction longitudinale 18 du conduit 15.

Selon un exemple de réalisation, le canal 16 peut être disposé de manière perpendiculaire au conduit 15. En d'autres termes, l'axe 23 du canal 16 est orthogonal à la direction longitudinale 18 du conduit 15. Le terme perpendiculaire couvre tous les positionnements sensiblement perpendiculaires du canal 16 vis-à-vis du conduit 15, c'est-à-dire en y incorporant les tolérances de fabrication du dispositif de connexion.

Selon un mode exemplatif de l'invention, le canal 16 est raccordé au conduit 15 en un endroit particulier de ce dernier. Le canal 16 est ainsi centré sur le conduit 15 selon la direction longitudinale 18, par rapport aux deux extrémités longitudinales 20 et 21 bordant l'embase 11. Autrement dit, une première distance séparant l'axe 23 du canal 16 d'une première extrémité longitudinale 20 de l'embase 11 est égale, ou sensiblement égale en raison des tolérances de fabrication, à une deuxième distance qui sépare ce même axe 23 d'une deuxième extrémité longitudinale 21 bordant l'embase 11. Une telle égalité peut également s'apprécier aux regards de bords terminaux des embouts 19.

La disposition perpendiculaire et centrée du canal 16 par rapport au conduit 15 permet de répartir le liquide circulant dans le conduit de manière identique de part et d'autre du canal 16.

Selon un exemple de réalisation, le dispositif de connexion 7 peut comprendre la canalisation 17 reliée hydrauliquement au canal 16. Cette canalisation a pour fonction d'alimenter en liquide le canal 16, et de manière subséquente le conduit 15. Cette canalisation 17 est formée par un évidement rectiligne aménagé dans le flanc 22, cet évidement étant débouchant du dispositif de connexion de manière à raccorder hydrauliquement le dispositif de connexion au tube d'alimentation en liquide référencé 4 sur la figure 1. Cette canalisation 17 s'étend selon un axe 24 transversal, autrement dit concourant, avec l'axe 23 du canal 16. Cet axe 24 de la canalisation 17 peut par exemple être parallèle à la direction longitudinale 18 le long de laquelle le conduit 15 s'étend.

Le dispositif de connexion 7 et le bras d'essuyage, notamment via l'adaptateur, sont reliés mécaniquement par le moyen de liaison 25, par exemple la liaison pivot. En ce qui concerne le dispositif de connexion 7, cette liaison pivot est mise en oeuvre par une cavité 26 réalisée dans le flanc 22. Cette cavité 26 s'étend selon une direction 27 parallèle à la direction transversale OZ. En d'autres termes, la cavité 26 peut être un trou d'axe central parallèle à la direction transversale OZ. Dans le plan OXY, la cavité 26 présente une section circulaire.

Selon l'invention, le canal 16 débouche au niveau du moyen de liaison 25. En d'autres termes, le canal 16 se termine dans une paroi interne du flanc 22 délimitant la cavité 26. Une autre extrémité du canal 16 se termine dans une paroi interne de l'embase 11 délimitant le canal 15.

La figure 2 montre également l'existence d'un moyen d'obturation 28 du canal 16 qui débouche au niveau du moyen de liaison 25. En effet, il est nécessaire d'organiser une étanchéité au liquide au niveau de la cavité 26. Le moyen d'obturation 28 est ainsi logé dans la cavité 26 du moyen de liaison 25, de manière à fermer le canal 16 qui s'ouvre dans la paroi interne de la cavité 26.

De manière complémentaire, le moyen d'obturation 28 peut également participer à la fonction mise en oeuvre par le moyen de liaison 25. On peut donc considérer que le moyen de liaison 25 comprend le moyen d'obturation 28. Dans une telle alternative, le moyen d'obturation 28 est formé par une bague 29 comprenant un trou 30 et constitutif de la liaison pivot opérée par le moyen de liaison 25 au bras d'essuyage. La périphérie externe de la bague 29 est par exemple circulaire. La périphérie interne de la bague 29 délimitant le trou est circulaire.

Selon l'exemple de la figure 2, la cavité 26 délimite un épaulement 31 ménagé sur une face du flanc 22. Cet épaulement 31 reçoit un bord annulaire 32 ménagé à une extrémité de la bague 29. Une fois la bague 29 logée dans la cavité 26, une face terminale de la bague où est ménagé le bord annulaire s'étend dans le plan d'une face latérale du flanc 22.

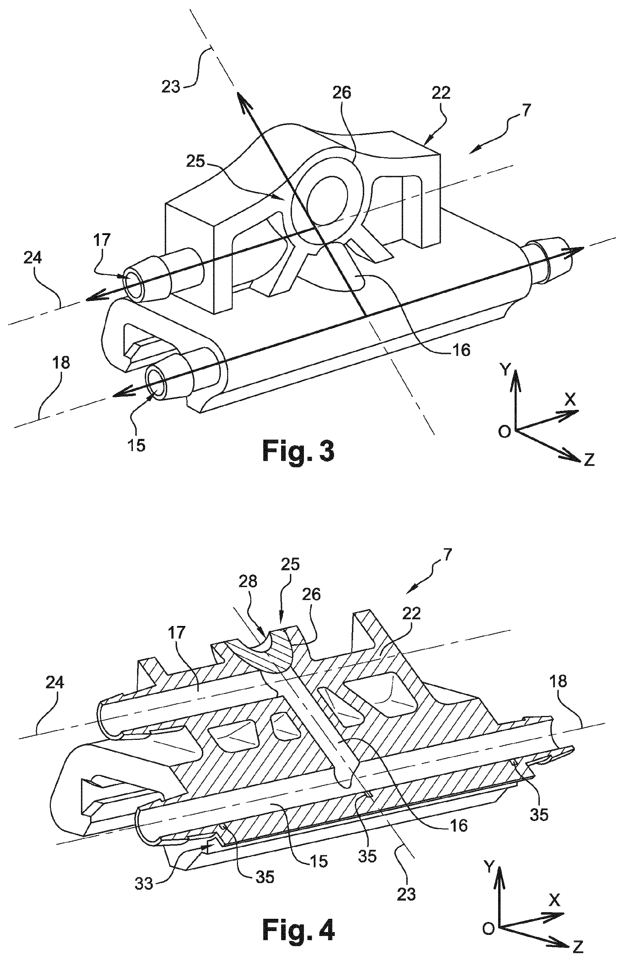

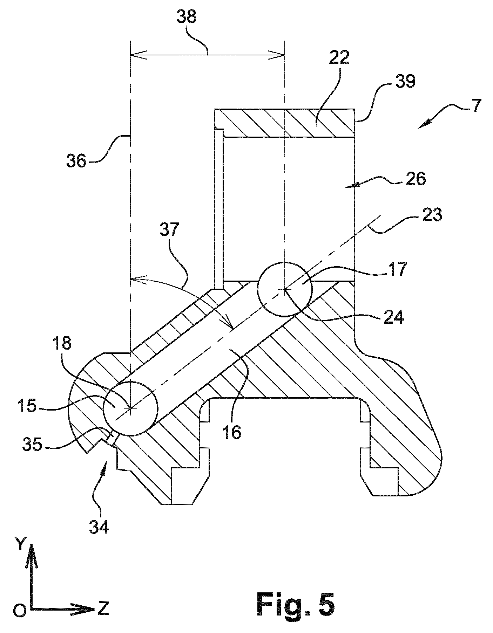

Selon un exemple de l'invention, le dispositif de connexion 7 peut comprendre une zone 33 aménagée le long du conduit 15 permettant de réaliser au moins un orifice de projection (visible sur les figures 4 ou 5) du liquide sur la vitre essuyé par le balai d'essuyage. Avantageusement, la zone 33 permet de répartir une pluralité d'orifices de projection. Une telle zone 20 est dépourvue de forme susceptible de gêner la répartition des orifices de projection 35, notamment grâce au fait que le tiroir qui forme le canal 16 est extrait via la cavité 26.

Le ou les orifices de projection sont par exemple des trous d'axe transversal, et avantageusement perpendiculaire, à la direction longitudinale 18 du conduit 15. Ces trous relient ainsi le conduit 15 au milieu environnant le dispositif de connexion 7.

Selon un exemple de réalisation, cette zone 33 est ménagée sur une face externe de l'embase 11. Cette zone s'étend selon la direction longitudinale OX, parallèlement au conduit 15, et sur un secteur angulaire déterminé autour de la direction longitudinale 18 du conduit 15. Cette zone 33 est par exemple formée sur une partie inférieure de l'embase 11, c'est-à-dire de manière adjacente au moyen de solidarisation 8.

Le flanc 22 surplombant l'embase 11, on considère que la zone 33 est aménagée sur une portion de la face externe de l'embase 11 opposée au flanc 22 par rapport au conduit 15.

Selon un exemple de réalisation, il est ainsi considéré qu'une zone 33 est formée dès lors qu'il existe une paroi lisse de la face externe de l'embase 11 qui s'étend longitudinalement selon la direction longitudinale OX le long du conduit 15 sur au moins 50% de cette face externe, cette paroi lisse étant alors pourvu des orifices de projection. Le caractère lisse de la paroi est formé dès lors que la paroi est dépourvue de formes susceptibles de gêner le perçage d'un orifice de projection.

Selon un autre exemple illustré sur la figure 2, la zone 33 est formée par une rainure 34 pratiquée dans l'embase 11 le long du conduit 15. Une telle rainure est en retrait vers le conduit 15 par rapport à la face externe qui délimite l'embase 11. En d'autres termes, cette rainure 34 est une cavité rectiligne aménagée le long du conduit 15. La longueur des trous formant orifice de projection est ainsi réduite à l'épaisseur de l'embase 11 au droit de la rainure 34. Cette rainure 34 présente ainsi un fond lisse au niveau duquel sont réalisés les perçages générateur des orifices de projection.

On notera que la répartition des orifices de projection ménagés au niveau de la zone 33 peut être non-constante. En d'autres termes, l'espacement qui sépare chaque couple d'orifices de projection est différent. Il peut, par exemple, être évolutif et linéaire, notamment croissant ou décroissant d'une extrémité longitudinale à l'autre du dispositif de connexion 7.

La figure 3 montre un dispositif de connexion identique à celui décrit ci-dessus. Cette figure symbolise le sens de déplacement des tiroirs, lors du démoulage d'un dispositif de connexion selon l'invention.

Le conduit 15 est ainsi réalisé par la combinaison de deux tiroirs qui se déplacent lors du démoulage selon la direction longitudinale dans deux sens opposés. La canalisation 17 est réalisée par un unique tiroir qui se déplace selon l'axe 24 de la canalisation 17 lors du démoulage, selon un sens identique à l'un des tiroirs générateur du conduit 15. Enfin, le canal 16 est réalisé par un unique tiroir qui se déplace selon l'axe 23 du canal 16 en passant de manière oblique par la cavité 26 formée dans le flanc 22.

La figure 4 est une coupe longitudinale du dispositif de connexion 7 et réalisé selon un plan incliné passant par le conduit 15, le canal 16 et la canalisation 17. On constate sur cette figure que la canalisation 17 débouche dans le canal 16 au niveau du moyen de liaison 25. Selon une variante non représentée, ce canal et cette canalisation peuvent être raccordés l'un à l'autre en un point distinct de la cavité.

Selon la variante illustrée sur la figure 4, la canalisation 17 et le canal 16 débouchent tous les deux au niveau d'une même bouche ménagée dans la paroi interne du flanc 22 délimitant la cavité 26.

Cette figure montre encore un contact entre le moyen d'obturation 28 et la cavité 26, un tel contact physique assurant une étanchéité au liquide au droit de la bouche ménagée dans la paroi interne délimitant la cavité 26.

La figure 4 illustre également bien un effet de l'invention. Comme l'extraction du tiroir générateur du canal 16 est opérée par la cavité 26, la zone 33 où sont ménagés les orifices de projections 35 est dépourvue de forme résultant de l'extraction du tiroir et empêchant le perçage d'un orifice de projection dans le prolongement du canal 16.

La figure 5 montre le dispositif de connexion 7 dépourvu de son moyen d'obturation, vue dans un plan OYZ passant par le canal 16. Selon cet exemple de réalisation, le conduit 15 et la canalisation 17 s'étendent selon la direction longitudinale 18 et l'axe 24 qui sont rectilignes et parallèles l'un à l'autre.

Cette figure montre que le canal 16 est incliné autour de la direction longitudinale 18 d'extension du conduit 15, par rapport à un axe verticale 36 parallèle à la direction verticale OY. L'inclinaison du canal 16, symbolisée par l'axe 23 de ce canal, peut prendre tout angle référencé 37 compris entre 0° et 60°, par rapport à l'axe verticale 36.

Sur l'exemple particulier de la figure 5, l'angle 37 est compris entre 45° et 55° par rapport à la direction verticale 36, une telle fourchette de valeur offrant un bon compromis pour respecter un encombrement limité du dispositif de connexion 7. Un parfait compromis est atteint quand l'angle 37 est égal à 53°, soit 37° par rapport à une direction horizontale.

Cette figure rend également particulièrement apparente la présence d'un orifice de projection 35 réalisé au fond de la rainure 34 et dans le prolongement du canal 16.

La section, en particulier le diamètre, du tiroir générateur du canal 16 et/ou l'angle 37 et/ou la distance 38 qui sépare le conduit 15 de la canalisation 17 selon la direction transversale OZ et/ou la section, notamment le diamètre, de la cavité 26 sont choisis de sorte à éviter toute interférence mécanique entre l'extraction du tiroir générateur du canal 16 et une arête 39 ménagée entre la cavité et une face latérale du flanc 22.

Le dispositif de connexion 7 décrit ci-dessus est avantageusement unitaire, c'est-à-dire constitué par une même matière synthétique. Ce dispositif de connexion peut ainsi être fabriqué au cours d'une unique opération de moulage, notamment par injection.

Dans le système d'essuyage selon l'invention, on note que les orifices d'aspersion du balai d'essuyage et les orifices de projection 35 du dispositif de connexion 7 peuvent être répartis selon la direction longitudinale du balai d'essuyage de manière à respecter un espacement non constant entre orifices. En d'autres termes, les orifices de projection ménagés dans le dispositif de connexion 7 sont réalisés dans la continuité des orifices d'aspersion réalisés au niveau de la rampe de projection du balai d'essuyage. Le principe de répartition défini dans le document WO2011/160952A1 n'est ainsi pas interrompu par la présence de forme gênante ménagée sur le dispositif de connexion 7.

Selon un exemple, la variabilité d'un tel espacement peut être linéaire, de manière croissante ou décroissante d'une extrémité longitudinale à l'autre du balai d'essuyage constitutif du système d'essuyage selon l'invention.

## Revendications

1. Dispositif de connexion (7) apte à relier un balai d'essuyage (3) d'une vitre d'un véhicule à un bras d'essuyage (1) comprenant au moins un moyen de solidarisation (8) sur le balai d'essuyage (3) et un moyen de liaison (25) avec le bras d'essuyage (1), ledit dispositif de connexion (7) comprenant au moins un canal (16) dans lequel un liquide est apte à circuler, le canal (16) débouche au niveau du moyen de liaison (25), un conduit (15) s'étend selon une direction longitudinale (OX) d'extension du dispositif de connexion (7) et est en communication avec le canal (16), ce dernier étant agencé transversalement au conduit (15), le dispositif de connexion (7) comprend un moyen d'obturation (28) du canal (16) au niveau du moyen de liaison (25), **caractérisé en ce que** le moyen d'obturation (28) est formé par une bague (29) comprenant un trou (30) constitutif d'une liaison pivot apte à être opérée entre le dispositif de connexion (7) et le bras d'essuyage (1).

2. Dispositif selon la revendication 1, dans lequel le canal (16) s'étend selon un axe (23) perpendiculaire à une direction longitudinale (18) dans laquelle s'étend le conduit (15).

3. Dispositif selon l'une quelconque des revendications 1 à 2, dans lequel est prévue une canalisation (17) en communication avec le canal (16), ladite canalisation (17) s'étendant selon un axe (24) concourant à un axe (23) d'extension du canal (16).

4. Dispositif selon la revendication 3, dans lequel la canalisation (17) débouche dans le canal (16) au niveau du moyen de liaison (25).

5. Dispositif selon l'une des revendications précédentes, comprenant une embase (11) dans laquelle est ménagé le conduit (15), ladite embase (11) étant surmontée par un flanc (22) dans lequel sont ménagés au moins en partie le canal (16) et le moyen de liaison (25).

6. Dispositif selon la revendication 5, dans lequel le moyen de liaison (25) comprend le moyen d'obturation (28) logé dans une cavité (26) ménagée dans le flanc (22).

7. Dispositif selon l'une quelconque des revendications précédentes, dans lequel la cavité (26) délimite un épaulement (31) dans lequel se loge un bord annulaire (32) ménagé sur la bague (29).

8. Dispositif selon l'une quelconque des revendications 6 à 7, dans lequel la cavité (26) présente une section circulaire et s'étend selon une direction (27) transversale à la direction longitudinale (18) d'extension du conduit (15).

9. Dispositif selon l'une quelconque des revendications précédentes, dans lequel le canal (16) est incliné autour de la direction longitudinale (18) d'extension du conduit (15) selon un angle (37) compris entre 0°, correspondant à une direction verticale (36), et 60°.

10. Dispositif selon l'une quelconque des revendications précédentes, dans lequel l'angle (37) est compris entre 45° et 55°.

11. Dispositif selon l'une quelconque des revendications précédentes, dans lequel est ménagé au moins un orifice de projection (35) agencé pour projeter le liquide sur la vitre.

12. Système d'essuyage d'une vitre d'un véhicule comprenant un balai d'essuyage (3) relié mécaniquement à un bras d'essuyage (1) au moins par un dispositif de connexion (7) selon l'une quelconque des revendications précédentes.

13. Système selon la revendication 12, dans lequel le balai d'essuyage (3) comprend au moins une rampe de projection (8) d'un liquide de lavage de la vitre alimentée en liquide de lavage par le dispositif de connexion (7).

## Patentansprüche

1. Verbindungsvorrichtung (7), die sich zur Verbindung eines Scheibenwischerelements (3) eines Fensters eines Fahrzeugs mit einem Wischerarm (1) eignet, umfassend mindestens ein Mittel (8) zum festen Anbringen an dem Scheibenwischerelement (3) und ein Mittel (25) zur Verbindung mit dem Wischerarm (1), wobei die Verbindungsvorrichtung (7) mindestens einen Kanal (16) umfasst, in dem eine Flüssigkeit zirkulieren kann, wobei der Kanal (16) an dem Verbindungsmittel (25) mündet, wobei sich eine Leitung (15) entlang einer Längsrichtung (OX) mit der Erstreckung der Verbindungsvorrichtung (7) erstreckt und mit dem Kanal (16) in Verbindung steht, wobei letzterer quer zur Leitung (15) angeordnet ist, wobei die Verbindungsvorrichtung (7) ein Mittel (28) zum Verschließen des Kanals (16) an dem Verbindungsmittel (25) umfasst, **dadurch gekennzeichnet, dass** das Verschlussmittel (28) durch eine Buchse (29) gebildet wird, die einen Durchtritt (30) aufweist, Teil einer Schwenkverbindung bildet, welche zwischen der Verbindungsvorrichtung (7) und dem Wischerarm (1) wirken kann.

2. Vorrichtung nach Anspruch 1, wobei sich der Kanal (16) entlang einer Achse (23) erstreckt, die senkrecht zur Längsrichtung (18) verläuft, in der sich die Leitung (15) erstreckt.

3. Vorrichtung nach einem der Ansprüche 1 bis 2, wobei ein Rohr (17) vorgesehen ist, das mit dem Kanal (16) in Verbindung steht, wobei das Rohr (17) entlang einer Achse (24) verläuft, die die Erstreckungsachse (23) des Kanals (16) schneidet.

4. Vorrichtung nach Anspruch 3, wobei das Rohr (17) an dem Verbindungsmittel (25) in dem Kanal (16) mündet.

5. Vorrichtung nach einem der vorhergehenden Ansprüche, die eine Basis (11) umfasst, in der die Leitung (15) ausgebildet ist, wobei die Basis (11) von einer Flanke (22) überragt wird, in der der Kanal (16) und das Verbindungsmittel (25) zumindest teilweise ausgebildet sind.

6. Vorrichtung nach Anspruch 5, wobei das Verbindungsmittel (25) das Verschlussmittel (28) umfasst, das in einem in der Flanke (22) ausgebildeten Hohlraum (26) aufgenommen ist.

7. Vorrichtung nach einem der vorhergehenden Ansprüche, wobei der Hohlraum (26) eine Schulter (31) begrenzt, in der ein an der Buchse (29) ausgebildeter ringförmiger Rand (32) aufgenommen ist.

8. Vorrichtung nach einem der Ansprüche 6 bis 7, wobei der Hohlraum (26) einen kreisförmigen Querschnitt aufweist und sich entlang einer Richtung (27) erstreckt, die quer zur Längsrichtung (18) der Erstreckung der Leitung (15) verläuft.

9. Vorrichtung nach einem der vorhergehenden Ansprüche, wobei der Kanal (16) um die Längsrichtung (18) der Erstreckung der Leitung (15) in einem Winkel (37), der zwischen 0°, entsprechend einer Vertikalrichtung (36), und 60° liegt, geneigt ist.

10. Vorrichtung nach einem der vorhergehenden Ansprüche, wobei der Winkel (37) zwischen 45° und 55° liegt.

11. Vorrichtung nach einem der vorhergehenden Ansprüche, in der mindestens eine Sprühöffnung (35) ausgebildet ist, die zum Sprühen der Flüssigkeit auf das Fenster angeordnet ist.

12. Wischersystem für ein Fenster eines Fahrzeugs, das ein Scheibenwischerelement (3) umfasst, das mindestens durch eine Verbindungsvorrichtung (7) nach einem der vorhergehenden Ansprüche mechanisch mit einem Wischerarm (1) verbunden ist.

13. System nach Anspruch 12, wobei das Scheibenwischerelement (3) mindestens eine Sprührampe (8) für eine Waschflüssigkeit für das Fenster umfasst, die durch die Verbindungsvorrichtung (7) mit der Waschflüssigkeit versorgt wird.

## Claims

1. Connection device (7) adapted to connect a wiper blade (3) of a window of a vehicle to a wiper arm (1) comprising at least a means (8) for fastening it to the wiper blade (3) and a means (25) for connecting it to the wiper arm (1), said connection device (7) comprising at least one channel (16) in which a liquid is able to circulate, the channel (16) discharges at the level of the connection means (25), a conduit (15) extends along a longitudinal direction (OX) in which the connection device (7) extends and is in communication with the channel (16), the latter being arranged transversely to the conduit (15), the connection device (7) comprises a means (28) for blocking the channel (16) at the level of the connection means (25), **characterized in that** the blocking means (28) is formed by a ring (29) comprising a hole (30) that is part of a pivot connection adapted to be operative between the connection device (7) and the wiper arm (1).

2. Device according to Claim 1, wherein the channel (16) extends along an axis (23) perpendicular to a longitudinal direction (18) in which the conduit (15) extends.

3. Device according to either one of Claims 1 or 2, including a pipe (17) in communication with the channel (16), said pipe (17) extending along an axis (24) intersecting an axis (23) along which the channel (16) extends.

4. Device according to Claim 3, wherein the pipe (17) discharges into the channel (16) at the level of the connection means (25).

5. Device according to any one of the preceding claims, comprising a base (11) in which the conduit (15) is arranged, said base (11) being surmounted by a flank (22) in which are arranged at least in part the channel (16) and the connection means (25).

6. Device according to Claim 5, wherein the connection means (25) comprises the blocking means (28) housed in a cavity (26) in the flank (22).

7. Device according to any one of the preceding claims, wherein the cavity (26) delimits a shoulder (31) in which is housed an annular rim (32) on the ring (29).

8. Device according to either one of Claims 6 and 7, wherein the cavity (26) has a circular section and extends along a direction (27) transverse to the longitudinal direction (18) along which the conduit (15) extends.

9. Device according to any one of the preceding claims, wherein the channel (16) is inclined to the longitudinal direction (18) in which the conduit (15) extends at an angle (37) between 0°, corresponding to a vertical direction (36), and 60° inclusive.

10. Device according to any one of the preceding claims, wherein the angle (37) is between 45° and 55° inclusive.

11. Device according to any one of the preceding claims, including at least one sprayer orifice (35) adapted to spray the liquid onto the window.

12. System for wiping a window of a vehicle comprising a wiper blade (3) mechanically connected to a wiper arm (1) at least by a connection device (7) according to any one of the preceding claims.

13. System according to Claim 12, wherein the wiper blade (3) comprises at least one manifold (8) for spraying a liquid for washing the window fed with washer liquid by the connection device (7).
